# EUROPEAN PATENT APPLICATION

(11) **EP 2 009 905 A2**
(43) Date of publication of application: **31.12.2008**
(21) Application number: 08104330.9
(22) Date of filing: 10.06.2008
(51) Int. Cl.: H04N 5/202

(54) **An efficient method for gamma correction table update based on residual data**

(30) Priority: 29.06.2007 TR 200704548
(71) Applicant: Vestel Elektronik Sanayi ve Ticaret A.S., 45030 Manisa (TR)
(72) Inventor: Tasdizen, Ozgur ITU Ayazaga Kampusu, Maslak, ISTANBUL 34469 (TR)
(74) Representative: Cayli, Hülya

(57) **Abstract**

As required by the nature of flat panel displays, the image processing procedure requires gamma correction to be executed. The gamma correction operation is performed by making use of a reference table in silicon-based devices. Since different displays have distinct gamma curves, they require different reference table configurations. Therefore the reference table values must be stored in nonvolatile memories and must be loaded back while flat panel systems are switched on. The present invention reduces the required nonvolatile memory area by saving the absolute differences between successive values present in gamma correction lookup tables. Thanks to the present invention, it shall be possible to store more than one gamma correction tables in the memory and to control different displays by means of the same system.

## Description

### Field of Invention

The present invention relates to a method for updating the gamma correction table in order to reduce the memory area required for storing the gamma correction table.

### Prior Art

During the first days of display technologies, it was discovered that such displays were not capable to generate light intensities proportional with the input voltage. As a matter of fact, the relationship in a display screen between the magnitude of output signal and the magnitude of input signal is a nonlinear function and gamma is present in this function as an exponential parameter. The value of gamma alters depending on the display screen.

In order to overcome this problem, the input voltage applied to the display must be corrected with respect to gamma. Since the relationship is known between the amplitude of voltage sent to the monitor and that of the voltage generated there, it is possible to correct this signal prior to being sent to the monitor. This correction method is called as gamma correction and a correction table (reference or lookup table) designated as the gamma correction table is made use of in this procedure.

A memory area is required in this method to maintain such a complete reference table. For a color with a content of 'n' x 'bit', for instance, a '2^{N} x N bit' memory shall be required for each color (red, green, blue), but this amount making necessary a very large memory area in TV controllers. In order to solve the problem originating from this large memory area requirement, various methods have been developed which aim at reducing the size of the reference table.

In the patent document US2002063784A1 is disclosed a digital signal processor circuit with a gamma correction unit. Figure 1 illustrates a typical signal processor circuit described in this document. Said gamma correction unit executes the gamma correction operation of the digital input video signal by means of a gamma correction table, where in this system the number of bits input into the gamma correction unit is larger than the number of bits output from the gamma correction unit.

On the other hand the patent document US6833876B1 discloses a method for subjecting a color of 'n bits' to gamma correction on a CRT display and a device making use of a reduced-size reference table for this purpose. Figure 2 is a block diagram illustrating the gamma correction circuit disclosed in said patent document. According to this method, an "n-bit" input signal is separated into its most significant "m" bits and its least significant "m-n" bits. Here, instead of using its own complete n-bit value as the input address for the reference table of 2ⁿ x n size, a table is made use of, which has a size of 2^{m} x n containing only the most significant bits, such that the memory requirement for the reference table is reduced by the factor of 2^{(n-m)}.

The documents referred to hereinabove regarding the relevant prior art are mainly focused on reducing the size of gamma correction tables. Such documents are not concerned with the loading mechanisms of gamma correction tables and with the size of nonvolatile memory areas required for gamma correction tables.

### Objective of Invention

The objective of the present invention is to reduce the nonvolatile memory area required for storing the gamma correction table configurations by making use of residual data between the gamma correction values.

### Brief Description of Figures

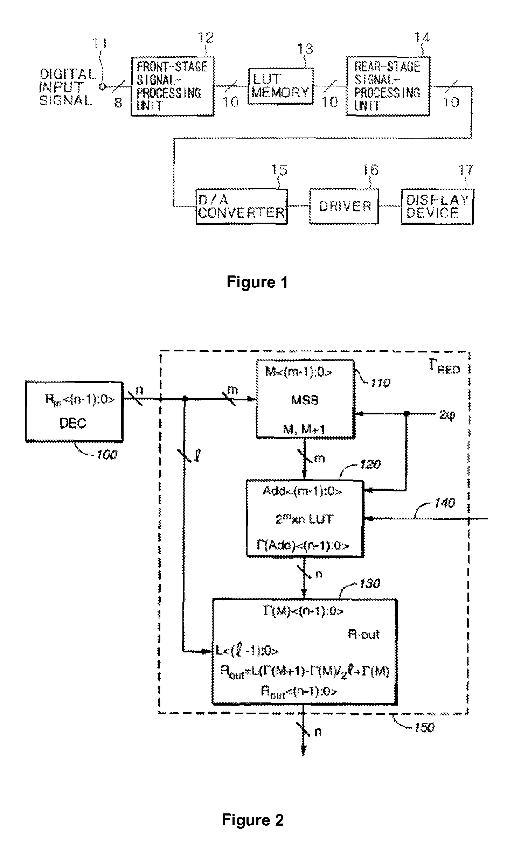

Figure 1 is a block diagram illustrating a typical display system according to the prior art.
Figure 2 is a general block diagram according to the prior art.
Figure 3 is a block diagram of the gamma correction table.
Figure 4 is a general block diagram illustrating the procedure of loading from the memory.

### Description of Invention

As required by the nature of flat panel displays, the image processing procedure requires gamma correction to be executed for solving the problem related to nonlinear amplitude. Said gamma correction procedure modifies the input signal before being delivered to the display.

The gamma correction procedure is implemented by means of a "reference table" (lookup table) in silicon-based devices, whereas the present invention reduces the area of memory required for storing such reference tables used for gamma correction purpose. Since different displays have distinct gamma curves, each display shall necessitate a specific gamma correction table. Accordingly, such gamma correction tables cannot be realized as a Read Only Memory (ROM) in the same integrated circuit. If realized like this, the produced integrated circuits shall become such kind of circuit peculiar to flat panel displays.

Therefore the values of gamma correction tables must be stored in nonvolatile memories and the gamma correction tables must be loaded as the flat panel display systems are switched on.

The main idea of the present invention is to reduce the amount of nonvolatile memory area required for storing gamma correction tables by storing the absolute differences among successive values present in gamma correction tables. This storage procedure is realized by the manufacturer for different display configurations. While the display system is switched on, the proper reference table shall be loaded for the proper display so that the gamma correction procedure is realized according to such table loaded.

Said gamma correction table update procedure comprises two main steps: storing procedure -in this procedure, the gamma correction table is compressed by the manufacturer and stored in a nonvolatile memory; loading procedure -in this procedure, the gamma correction table maintained in the nonvolatile memory in compressed form is decompressed while the device is switched on and is loaded to the system in its original form to be used in the gamma correction operation.

The storing procedure starts with the first value in the gamma correction table, this value being typically zero. The first value is saved on the first area in the memory. The following values are stored by calculating the difference between two successive gamma correction values and saving this difference on the next area in the memory.

With the storing procedure for gamma correction tables is completed, the relevant hardware shall be capable to maintain all tables on a smaller memory area on its own memory. Following the decompressing and loading procedures of the reference table, such data shall be used in the gamma correction procedure.

During the switching-on period, the reference table amongst those stored reference table configurations in the memory that would comply with the chosen display type shall be acquired and loaded to the system. The selection of display type can also be made by the user, in place of the manufacturer only. In this procedure, the first value in the modified reference table is acquired at first. The first value is added to an initial value (zero value) and the result of this operation is loaded to the system as the first value in the reference table. The following values are loaded after such values are added to the preceding loaded value. The first value is summed with the value (typically zero) kept in the accumulator and the result is written to the first value on the reference table. No separate hardware is installed for the accumulator system for saving the value kept in the accumulator, but the TV system's software is used for this purpose.

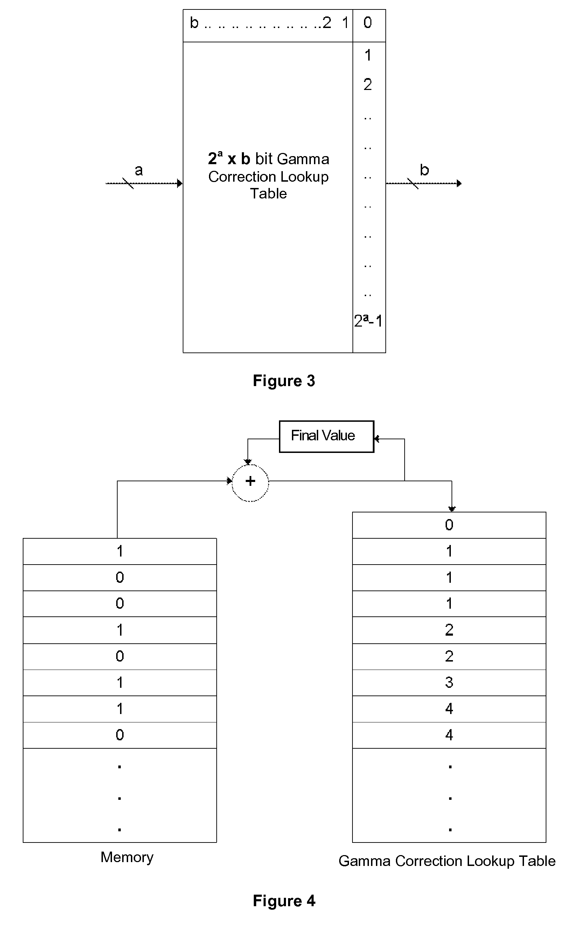

A block diagram is illustrated in Figure 4 of the procedure for uncompressing and loading the compressed data. As can be seen from this diagram, the differences saved in the memory are read from the nonvolatile memory, and by making an evaluation of difference values, the gamma correction reference table is brought to its initial form.

This method is applicable to red, green, and blue gamma correction tables, reducing the amount of the nonvolatile memory area by a factor of "n/m" ("n" being the width of gamma table and "m" the number of bits used to code the residual data). Since the difference between two adjacent gamma curve values [step size = gammaₙ-gamma₍ₙ₋₁₎] is greater than or equal to zero, no sign bit is necessitated. Additionally, the magnitude of said step size is so low that it can be coded by one bit or two bits only.

For instance, assuming that the residual data is coded with two bits (m=2) for a 10-bit gamma table (n=10), an 80% saving is ensured for the memory area; or if a single bit (m=1) is used for loading an 8-bit gamma table (n=8), an 87,5% saving is made on the nonvolatile memory area.

This method does not require any additional hardware. The signal processing integrated circuit of the flat panel system can load the correction tables as the device is switched on. A slight modification shall be required on the software run in this system. In addition, it shall be possible to store more than one gamma correction tables in the memory and to control different displays by means of the same system thanks to the present invention. Since the method according to the present invention shall reduce the required nonvolatile memory area, the system's total power consumption shall be lowered as well.

## Claims

1. A method for reducing the memory area required for storing gamma correction tables, comprising:
• a first step containing the following sub-steps in order to store gamma correction table configurations in compressed form in a nonvolatile memory:
- reading the first gamma correction value (n) in the gamma correction reference table,
- reading the next gamma correction value [(n+1)^{th} value],
- comparing said next gamma correction value [(n+1)^{th} value] to said preceding gamma correction value [(n)],
- calculating the difference between two adjacent values to obtain a differential value,
- saving said differential value on a memory area in said nonvolatile memory,
- repeating this procedure until the final differential value is saved, and
- turning back to the first step to save the next reference table configuration;
• a second step containing the following sub-steps in order to reload the gamma correction table present in the memory to a volatile memory in its original form:
- choosing the proper reference table configuration in compressed form from said nonvolatile memory according to the type of display,
- acquiring the first value in the compressed reference table,
- adding the first value to a first/initial value and maintaining it in the accumulator,
- reloading the result kept in said accumulator to its place on the gamma correction reference table maintained in said volatile memory,
- reading the next differential value present in compressed form in said reference table,
- adding the next read differential value to the value on said accumulator,
- loading the result obtained in said accumulator to its place on the gamma correction reference table maintained in said volatile memory,
- repeating this procedure until the final value is saved.

2. A method according to Claim 1, **characterized in that** said first step is realized by the manufacturer.

3. A method according to Claim 1, **characterized in that** said first step is realized for different display configurations.

4. A method according to Claim 1, **characterized in that** the choosing of proper reference table configuration in said compressed form is realized by the manufacturer within said first step.

5. A method according to Claim 4, **characterized in that** the choosing of proper reference table configuration in said compressed form is realized by the user within said first step.

6. A method according to Claim 1, **characterized in that** said second step is realized while the display system is switched on.

7. A method according to Claim 1, **characterized in that** once said second procedure is completed, the relevant gamma correction operation is realized in compliance with said gamma correction reference table.

8. A method according to Claim 1, **characterized in that** said first/initial value is zero.

9. A method according to Claim 1, **characterized by** being applied to red, green, and blue gamma correction tables.

10. A method according to Claim 1, **characterized in that** the difference between two adjacent values [step size = gammaₙ- gamma₍ₙ₋₁₎] is greater than or equal to zero.
